# EUROPÄISCHE PATENTANMELDUNG

(11) **EP 4 186 625 A1**
(43) Veröffentlichungstag der Anmeldung: **31.05.2023**
(21) Anmeldenummer: 21211494.6
(22) Anmeldetag: 30.11.2021
(51) Int. Cl.: B23D 61/00

(54) **WERKZEUG FÜR EINEN OSZILLIERER**

(71) Anmelder: Steiger, Marco, 9556 Affeltrangen (CH)
(72) Erfinder: Steiger, Marco, 9556 Affeltrangen (CH)
(74) Vertreter: Gachnang AG Patentanwälte

(57) **Zusammenfassung**

Die Erfindung betrifft ein Werkzeug das für die Verwendung mit einem Oszillierer ausgelegt ist, der eine drehoszillierende Antriebseinrichtung aufweist. Das Werkzeug weist eine aus einem Blech tiefgezogene Anschlusseinrichtung auf mit einem Boden, einer konischen Seitenwandung, einem Flansch und fünf stumpfwinkligen Eckbereichen. Die fünf stumpfwinkligen Eckbereiche sind so ausgebildet, dass sie in drehmomentübertragende eckförmige Eingriffsbereiche der Antriebseinrichtung eingreifen und von dieser antreibbar sind.

## Beschreibung

Die Erfindung betrifft ein Werkzeug zur Verwendung mit einem Oszillierer. Oszillierer werden handgeführt verwendet und weisen eine drehoszillierende Antriebseinrichtung auf.

Werkzeuge für Oszillierer umfassen ein Arbeitselement, beispielsweise ein Sägeblatt, ein Schleifelement, ein Schaberelement, oder ähnliches und eine Anschlusseinrichtung. Zur Verbindung des Werkzeugs mit dem Oszillierer wird die Anschlusseinrichtung mit der Antriebseinrichtung des Oszillierers verbunden. Typischerweise erfolgt die Verbindung mittels Formschlusses, Kraftschlusses oder Form- und Kraftschlusses. Dazu wird die Anschlusseinrichtung beispielsweise mittels einer Befestigungsschraube, Befestigungsmutter oder mittels eines federgespannten Zugankers der Antriebseinrichtung gegen bzw. in die Antriebseinrichtung gedrückt, bzw. gegen die Antriebseinrichtung verspannt. Zu diesem Zwecke drückt die Befestigungsschraube, die Befestigungsmutter oder der federgespannte Zuganker beispielsweise auf einen mittigen Bereich der Anschlusseinrichtung. Zum Sägen, Schleifen, Schaben oder ähnliches treibt der Oszillierer die Antriebseinrichtung an. Die Antriebseinrichtung ihrerseits treibt die Anschlusseinrichtung und dadurch das Werkzeug an. Im Betrieb oszilliert die Antriebseinrichtung, mittels Vor- und Zurückdrehens der Antriebseinrichtung, um eine mittig durch die Antriebseinrichtung verlaufende Drehachse. Dabei überträgt die Antriebseinrichtung ein Drehmoment auf die verbundene Anschlusseinrichtung.

Aus dem Stand der Technik sind zahlreiche Ausgestaltungen von Werkzeugen, Anschlusseinrichtungen und auch Antriebseinrichtungen bekannt. Üblicherweise ist eine Anschlusseinrichtung ausschliesslich mit einer spezifischen Ausgestaltung einer Antriebseinrichtung verbindbar bzw. kompatibel. Des Weiteren weisen bekannte Anschlusseinrichtungen oft eine komplexe Ausgestaltung auf, welche mittels aufwändiger Herstellungsverfahren hergestellt werden müssen.

Ein solches Werkzeug ist beispielsweise in der WO 2015/014467 A1 offenbart. Bei den darin vorgeschlagenen Anschlusseinrichtungen liegt der Fokus auf der Bereitstellung einer möglichst grossen Anzahl von antreibbaren Flächenbereichen mittels derer das Werkzeug antreibbar ist bzw. angetrieben wird. Diese antreibbaren Flächenbereiche sind durch Übergangsbereiche, die nicht Teil der antreibbaren Flächenbereiche sind, miteinander verbunden. Die Übergangsbereiche dienen somit lediglich der Verbindung der antreibbaren Flächenbereiche.

Des Weiteren sind die sternförmigen Anschlusseinrichtungen der WO 2015/014467 A1, die eine grosse Anzahl an Zacken aufweisen, dazu ausgelegt mit einer Antriebseinrichtung eines Oszillierers verbunden zu werden, die eine mindestens gleich grosse Anzahl an Auflagebereichen aufweist. Dies deshalb, weil es, gemäss der Offenbarung der WO 2015/014467 A1, für eine optimale Drehmomentübertragung äusserst vorteilhaft ist, wenn das Werkzeug möglichst viele antreibbare Flächenbereiche aufweist.

Aufgabe der Erfindung ist es ein Werkzeug mit einer Anschlusseinrichtung für Oszillierer bereitzustellen, das im Vergleich zu oben genannten Werkzeugen bessere Gebrauchseigenschaften aufweist.

Die Aufgabe wird gelöst durch ein Werkzeug gemäss Anspruch 1. Die abhängigen Ansprüche betreffen bevorzugte Ausführungsformen des Werkzeugs.

Die Erfindung betrifft ein Werkzeug, das sich in Längsrichtung entlang einer Mittelachse erstreckt und für eine Verwendung mit einem handgeführten Oszillierer ausgelegt ist. Dieser handgeführte Oszillierer weist eine drehoszillierende Antriebseinrichtung mit zwölf in gleichen Abständen von einem Zentrum angeordneten drehmomentübertragenden eckförmigen Eingriffsbereichen auf. Dieser handgeführte Oszillierer kann zusätzlich oder alternativ Mitnehmerelemente aufweisen.

Das Werkzeug hat eine Anschlusseinrichtung, die aus einem Blech tiefgezogen ist, einen Boden, eine konische Seitenwandung und einen Flansch aufweist und in einem Endbereich des Werkzeugs ausgebildet ist.

Das Werkzeug hat ein Arbeitselement, das in einem, entlang der Mittelachse, der Anschlusseinrichtung gegenüberliegenden Endbereich des Werkzeugs angeordnet ist.

Das Werkzeug hat eine Werkzeugdrehachse, die mittig durch die Anschlusseinrichtung und rechtwinklig zum Boden verläuft.

Das Werkzeug hat eine Symmetrieebene, in der die Mittelachse und die Werkzeugdrehachse liegen.

Die konische Seitenwandung weist fünf stumpfwinklige Eckbereiche auf. Die fünf stumpfwinkligen Eckbereiche sind in einem gleichen Abstand zur Werkzeugdrehachse so ausgebildet, dass sie jeweils an den jeweiligen drehmomentübertragenden eckförmigen Eingriffsbereichen eingreifen und von diesen um die Werkzeugdrehachse antreibbar sind.

Von den fünf stumpfwinkligen Eckbereichen liegt der erste stumpfwinklige Eckbereich in der Symmetrieebene und der zweite, dritte, vierte und fünfte stumpfwinklige Eckbereich liegen seitlich der Symmetrieebene.

Die konische Seitenwandung weist zwischen den fünf stumpfwinkligen Eckbereichen einen geringeren Abstand zur Werkzeugdrehachse auf als bei den fünf stumpfwinkligen Eckbereichen. Um zum erfindungsgemässen Werkzeug zu gelangen, das im Vergleich zu Werkzeugen des Standes der Technik bessere Gebrauchseigenschaften aufweist, musste in einem ersten Schritt folgendes erkannt werden:
Die Anschlusseinrichtungen der Werkzeuge des Standes der Technik sind entweder komplex und lassen sich nur mittels aufwändiger Herstellverfahren herstellen und/oder sind ausschliesslich mit einer ganz spezifischen Ausgestaltung einer Antriebseinrichtung kompatibel.
Die sternförmigen Anschlusseinrichtungen der WO 2015/014467 A1, die eine grosse Anzahl an Zacken aufweisen, sind nur dann tiefziehbar, wenn dazu Blechmaterialien verwendet werden, die bei niedrigen mechanischen Spannungen fliessfähig sind. Dies wiederum hat zur Folge, dass ein solches Werkzeug, bzw. eine solche Anschlusseinrichtung in einem zusätzlichen, aufwändigen Verfahrensschritt gehärtet und/oder passiviert werden muss. Mit anderen Worten ist die Materialauswahl für das Tiefziehen solcher Anschlusseinrichtungen sehr stark eingeschränkt.
Ein Werkzeug-Oszillierer-System, das auf einer sternförmigen Anschlusseinrichtung gemäss der WO 2015/014467 A1 basiert, ist in Bezug auf die Auflage der Anschlusseinrichtung auf die Antriebseinrichtung zwangsläufig in hohem Masse überbestimmt. Dadurch ist ein guter Formschluss zwischen der Anschlusseinrichtung und der Antriebseinrichtung kaum erzielbar.

Basierend auf diesen Erkenntnissen mussten, in einem weiteren Schritt, Aufgaben bestimmt werden, deren Lösung zu einer Verbesserung der Gebrauchseigenschaften eines solchen Werkzeugs beitragen:
Bereitstellung eines Werkzeugs mit einer Anschlusseinrichtung, die eine hohe Festigkeit und/oder Oberflächenhärte und/oder chemische Beständigkeit aufweist, wobei das Werkzeug einfach und effizient herstellbar ist.
Dadurch wird eine wirtschaftliche Herstellung eines Werkzeugs mit längerer Lebensdauer und verbesserter Leistung ermöglicht.
Bereitstellung eines Werkzeugs mit einer Anschlusseinrichtung, die im Betrieb gekühlt wird. Dadurch wird die Lebensdauer und Leistung des Werkzeugs erhöht.
Bereitstellung eines Werkzeugs mit einer Anschlusseinrichtung, die beim Anpressen des Arbeitselements gegen ein zu bearbeitendes Werkstück im Formschluss mit der Antriebseinrichtung eines Oszillierers gefangen ist. Dadurch wird auch währenddessen das Werkzeug Arbeit an einem Werkstück verrichtet eine optimale Drehmomentübertragung ermöglicht.
Bereitstellung eines Werkzeugs mit einer Anschlusseinrichtung, die beim Auflegen auf eine Antriebseinrichtung eines Oszillierers einfach und sicher in eine Ausrichtung relativ zur Antriebseinrichtung führbar ist, die ein formschlüssiges Verspannen der Anschlusseinrichtung gegen die Antriebseinrichtung ermöglicht. Dies ermöglicht einen einfachen, schnellen und sicheren Werkzeugwechsel.
Bereitstellung eines Werkzeugs mit einer Anschlusseinrichtung, die mit unterschiedlichen Antriebseinrichtungen, die jeweils unterschiedliche Ausgestaltungen haben, kompatibel ist. Dies ermöglicht einen flexiblen Einsatz des Werkzeugs.

Diese Aufgaben mussten, in einem weiteren Schritt, gelöst werden:
Das erfindungsgemässe Werkzeug hat eine Anschlusseinrichtung, die aufgrund der einfachen Ausgestaltung mit den fünf antreibbaren stumpfwinkligen Eckbereichen, ein Tiefziehen der Anschlusseinrichtung auch mit Blechmaterialen ermöglicht, die eine höhere Festigkeit und/oder Oberflächenhärte haben und erst bei höheren mechanischen Spannungen fliessfähig sind.
Das erfindungsgemässe Werkzeug hat eine Anschlusseinrichtung, die aufgrund des geringeren Abstands zwischen der Werkzeugdrehachse und der konischen Seitenwandung zwischen den fünf stumpfwinkligen Eckbereichen Raum bereitstellt für eine Luftkühlung der bewegten Anschlusseinrichtung.
Das erfindungsgemässe Werkzeug hat eine Anschlusseinrichtung, die aufgrund der Ausbildung bzw. Anordnung der fünf stumpfwinkligen Eckbereiche, relativ zum Arbeitselement, im Formschluss gefangen ist, auch wenn das Arbeitselement gegen ein zu bearbeitendes Werkstück gedrückt wird. Dies deshalb, weil der stumpfwinklige Eckbereich, der in der Symmetrieebne liegt, und die beiden zu diesem nächstgelegenen stumpfwinkligen Eckbereiche, in die Richtung in der das Arbeitselement gegen das Werkstück gedrückt wird, eine Art Dreipunktauflage bilden, die die Anschlusseinrichtung zwingend in einen Formschluss drückt bzw. in einem solchen gefangen hält.
Das erfindungsgemässe Werkzeug hat eine Anschlusseinrichtung, die aufgrund der Ausbildung bzw. Anordnung der fünf stumpfwinkligen Eckbereiche, eine Führung bildet, die das Auflegen der Anschlusseinrichtung auf die Antriebseinrichtung in einer Ausrichtung, die ein formschlüssiges Verspannen der Anschlusseinrichtung gegen die Antriebseinrichtung ermöglicht, einfach und sicher macht. Dies deshalb, weil der stumpfwinklige Eckbereich, der in der Symmetrieebene liegt und die beiden zu diesem nächstgelegenen stumpfwinkligen Eckbereiche, eine Art Dreipunktauflage bilden, die die Anschlusseinrichtung in eine Ausrichtung führen die ein formschlüssiges Verspannen der Anschlusseinrichtung gegen die Antriebseinrichtung ermöglicht. Dazu muss die Anschlusseinrichtung entlang der Mittelachse und in Richtung des stumpfwinkligen Eckbereichs, der in der Symmetrieebene liegt, mit der Antriebseinrichtung in Anlage gebracht werden.
Das erfindungsgemässe Werkzeug hat, wie oben beschrieben, eine Anschlusseinrichtung, die ein Tiefziehen der Anschlusseinrichtung mit Blechmaterialen ermöglicht, die eine höhere Festigkeit und/oder Oberflächenhärte haben. Dies ermöglicht es in der Anschlusseinrichtung Ausnehmungen zu bilden, die mit entsprechenden Mitnehmerelementen einer Antriebseinrichtung drehmomentaufnehmend zusammenwirken.

Typischerweise schliessen die drehmomentübertragenden eckförmigen Eingriffsbereiche zur Antriebsdrehachse hin einen stumpfen Winkel von um die 120° ein. Dieser Winkel liegt in einer Ebene, zu der die Werkzeugdrehachse senkrecht steht.

Das Werkzeug kann beispielsweise eine Säge, ein Schaber, ein Messer, ein Schleifer oder ähnliches sein.

Die Längsrichtung entspricht der Richtung in der sich das Werkzeug überwiegend ausdehnt.

Die Mittelachse kann eine Mittelachse des Werkzeugs und/oder der Anschlusseinrichtung sein. Die Mittelachse kann eine Symmetrieachse sein.

Die drehoszillierende Antriebseinrichtung ist um das Zentrum bzw. um eine Antriebsdrehachse, die sich durch das Zentrum der Antriebseinrichtung erstreckt, um kleine Winkel vor und zurück drehbar. Im Betrieb oszilliert die drehoszillierende Antriebseinrichtung um eine Ruhestellung. Mit anderen Worten ausgedrückt, wird die Antriebseinrichtung mittels Drehung um die Antriebsdrehachse zwischen zwei Wendestellungen hin- und hergeschwenkt. Typischerweise schliessen die beiden Wendestellungen mit der Antriebsdrehachse einen Winkel, der zwischen 2° und 5° liegen kann, ein.

Die drehmomentübertragenden eckförmigen Eingriffsbereiche der Antriebseinrichtung sind in einer Ebene gleichmässig um die Antriebsdrehachse verteilt angeordnet. D.h. in Bezug auf die Antriebsdrehachse ist der Winkelabstand eines drehmomentübertragenden eckförmigen Eingriffsbereichs von einem nächsten drehmomentübertragenden eckförmigen Eingriffsbereich einheitlich, bzw. beträgt 30°. Der Abstand eines drehmomentübertragenden eckförmigen Eingriffsbereichs von der Antriebsdrehachse kann beispielsweise zwischen 15 mm und 18 mm betragen.

Ein drehmomentübertragender eckförmiger Eingriffsbereich überträgt ein von dem Oszillierer erzeugtes Drehmoment auf einen eingreifenden und mit dem drehmomentübertragenden eckförmigen Eingriffsbereich zusammenwirkenden stumpfwinkligen Eckbereich der Anschlusseinrichtung. Der drehmomentübertragende eckförmige Eingriffsbereich ist typischerweise abgerundet.

Ein Mitnehmerelement ist Teil der Antriebseinrichtung und dazu ausgelegt, in eine dazu passende Ausnehmung der Anschlusseinrichtung formschlüssig so einzugreifen, dass die Anschlusseinrichtung mittels Mitnehmer antreibbar ist. Ein Mitnehmerelement kann beispielsweise durch einen Vorsprung der Antriebseinrichtung gebildet oder ein aus der Antriebseinrichtung vorragender Stift oder ähnliches sein.

Das Blech kann beispielsweise ein Stahlblech, ein rostfreies Stahlblech, ein Chromstahlblech oder ein anderes metallisches Blech sein.

Die Anschlusseinrichtung ist tiefgezogen, d.h. sie wird mittels Drückens eines Stempels auf den späteren Boden der Anschlusseinrichtung hergestellt.

Der Flansch wird herstellungsbedingt gebildet. Das Arbeitselement ist typischerweise über den Flansch mit der Anschlusseinrichtung verbunden.

Die konische Seitenwandung erstreckt sich zwischen dem Flansch und dem Boden der Anschlusseinrichtung und ermöglicht durch die Bereitstellung der fünf stumpfwinkligen Eckbereiche und die Konizität der Seitenwandung ein spielfreies Verbinden der Anschlusseinrichtung mit der Antriebseinrichtung.

Die Endbereiche des Werkzeugs sind entlang der Mittelachse einander gegenüberliegend.

Das Arbeitselement kann ein Sägeblatt, ein Schleifelement, ein Schaberelement oder ähnliches sein.

Die Werkzeugdrehachse fällt mit der Antriebsdrehachse zusammen, wenn das Werkzeug mit der Antriebseinrichtung verbunden ist.

Die Symmetrieebene kann eine Symmetrieebene für die Anschlusseinrichtung und/oder eine Symmetrieebene für das Werkzeug sein.

Die fünf stumpfwinkligen Eckbereiche sind Teile der konischen Seitenwandung und typischerweise abgerundet und können so in drehmomentübertragende eckförmige Eingriffsbereiche der Antriebseinrichtung effektiv eingreifen. Somit erfolgt der Antrieb mittels Übertragung eines Drehmoments auf die fünf stumpfwinkligen Eckbereiche. Die fünf stumpfwinkligen Eckbereiche können in einem gleichen Abstand von zwischen 15 mm und 18 mm zur Werkzeugdrehachse ausgebildet sein.

Ein stumpfwinkliger Eckbereich schliesst zur Werkzeugdrehachse hin einen stumpfen Winkel ein, wobei dieser Winkel in einer Ebene liegt, zu der die Werkzeugdrehachse senkrecht steht.

Die geringe Anzahl an antreibbaren stumpfwinkligen Eckbereichen und deren Anordnung stellen ein Werkzeug-Oszillierer-System bereit das einen verbesserten Formschluss mit der Antriebseinrichtung ermöglicht.

Der Effekt kommt besonders dann zum Tragen, wenn das Werkzeug im Betrieb, also beim Sägen, Schleifen, Schaben oder ähnliches gegen das zu bearbeitende Werkstück gedrückt wird. Eine entsprechende Kraft wirkt typischerweise in Längsrichtung, bzw. in Richtung der Mittelachse des Werkzeugs. Weil einer der fünf stumpfwinkligen Eckbereiche in der Symmetrieebene liegt wird die Antriebseinrichtung zwangsläufig gegen diesen einen stumpfwinkligen Eckbereich gedrückt. Durch die weiteren der fünf stumpfwinkligen Eckbereiche, die seitlich der Symmetrieebene angeordnet sind, wird ein Verkippen der Anschlusseinrichtung auf eine Seite des einen stumpfwinkligen Eckbereichs verhindert. Zwischen den fünf stumpfwinkligen Eckbereichen können auch zusätzliche, beispielsweise zwei, stumpfwinklige Stützbereiche an der Anschlusseinrichtung ausgebildet sein. Diese stumpfwinkligen Stützbereiche sind so ausgebildet, dass sie nicht in eckförmige Eingriffsbereiche der Antriebseinrichtung, die zwölf in gleichen Abständen von einem Zentrum angeordnete drehmomentübertragende eckförmige Eingriffsbereiche aufweist, eingreifen. Mit anderen Worten ausgedrückt sind solche stumpfwinkligen Stützbereiche radial zur Werkzeugdrehachse hin zurückversetzt und so ausgebildet, dass sie sich radial nicht in eckförmige Eingriffsbereiche erstrecken. Diese stumpfwinkligen Stützbereiche sind näher bei der Werkzeugdrehachse ausgebildet als die fünf stumpfwinkligen Eckbereiche. Diese stumpfwinkligen Stützbereiche sind so ausgebildet, dass sie jeweils mit der Antriebseinrichtung in Kontakt bringbar sind und zwar in einem eckförmigen Stützbereich der Antriebseinrichtung, der mittig zwischen zwei eckförmigen Eingriffsbereichen ausgebildet ist. Solche stumpfwinkligen Stützbereiche können einer Verkippung der Anschlusseinrichtung zusätzlich entgegenwirken.

Zwischen den fünf stumpfwinkligen Eckbereichen liegt die konische Seitenwandung näher bei der Werkzeugdrehachse als die fünf stumpfwinkligen Eckbereiche. Wenn das Werkzeug mit der Antriebseinrichtung verbunden ist, wird dadurch ein Raum bereitgestellt, der eine effiziente Luftkühlung der Anschlusseinrichtung und des Werkzeugs, beispielsweise basierend auf dem Prinzip der Konvektion, ermöglicht. Luftmassen, die sich in diesem Raum befinden werden durch die Bewegung der Anschlusseinrichtung im Betrieb bewegt, wodurch Wärme von der Anschlusseinrichtung mittels Konvektion abführbar ist.

Mit anderen Worten ausgedrückt führt die Konzentration des Drehmomentübertrags auf die fünf stumpfwinkligen Eckbereiche, die geringe Anzahl an stumpfwinkligen Eckbereichen, und deren spezifische Anordnung in Kombination zu einer besseren, spielfreien Verbindbarkeit des Werkzeugs mit der Antriebseinrichtung.

Diese bessere Verbindbarkeit ermöglicht in Kombination mit der Beabstandung der konischen Seitenwandung zur Werkzeugdrehachse die Bereitstellung eines Werkzeugs mit verbesserten Gebrauchseigenschaften.

Das erfindungsgemässe Werkzeug wird typischerweise mittels einer Anpresskraft gegen die Antriebseinrichtung verspannt. Diese Anpresskraft wirkt in normaler Richtung auf den Boden der Anschlusseinrichtung. Die Anpresskraft presst bzw. drückt die Anschlusseinrichtung in Richtung der Werkzeugdrehachse bzw. in Richtung der Antriebsdrehachse gegen die Antriebseinrichtung. Die Anpresskraft kann beispielsweise mittels einer Befestigungsschraube, Befestigungsmutter oder eines federgespannten Zugankers erzeugt werden. Dabei drückt die Befestigungsschraube, die Befestigungsmutter oder der federgespannte Zuganker auf einen mittigen Bereich des Bodens der Anschlusseinrichtung.

Aufgrund der Ausgestaltung der Anschlusseinrichtung mit den fünf stumpfwinkligen Eckbereichen ist diese einfach tiefziehbar. D.h. die Form der Anschlusseinrichtung ist nicht komplex und ermöglicht das Tiefziehen der Anschlusseinrichtung mit unterschiedlichen Blecharten bzw. Blechmaterialien. Beispielsweise kann die Anschlusseinrichtung aus einem rostfreien Stahlblech, insbesondere aus einem Chromstahlblech tiefgezogen werden, welches chemisch beständig ist und eine hohe Festigkeit und Oberflächenhärte aufweist.

Gemäss einer Ausführungsform der Erfindung schliessen die fünf stumpfwinkligen Eckbereiche jeweils, zur Werkzeugdrehachse hin einen gleichen Winkel ein, vorzugsweise von zwischen 110° und 130°, besonders bevorzugt von 120°.

Dieser Winkel liegt in einer Ebene, zu der die Werkzeugdrehachse senkrecht steht.

Dadurch wird ein tiefer Eingriff der stumpfwinkligen Eckbereiche in die drehmomentübertragenden eckförmigen Eingriffsbereiche ermöglicht.

Gemäss einer Ausführungsform der Erfindung weist jeder der fünf stumpfwinkligen Eckbereiche eine Winkelhalbierende zum eingeschlossenen Winkel auf, wobei diese Winkelhalbierende rechtwinklig zur Werkzeugdrehachse verläuft und diese schneidet, und auf jeder Winkelhalbierenden genau ein stumpfwinkliger Eckbereich liegt.

Dabei ist genau im Sinne von ausschliesslich bzw. nur zu verstehen. Somit ist, in Bezug auf die Werkzeugdrehachse und entlang der Winkelhalbierenden, gegenüber jedem der fünf stumpfwinkligen Eckbereiche kein stumpfwinkliger Eckbereich ausgebildet. Dadurch bleibt die Anschlusseinrichtung im Betrieb noch besser im Formschluss mit der Antriebseinrichtung gefangenen, bzw. ist die Anschlusseinrichtung beim Auflegen auf eine Antriebseinrichtung noch einfacher und sicherer in die vorgegebene Ausrichtung relativ zur Antriebseinrichtung führbar.

Gemäss einer Ausführungsform der Erfindung weist, in Bezug auf die Werkzeugdrehachse, der erste stumpfwinklige Eckbereich zu dem zweiten stumpfwinkligen Eckbereich, der erste stumpfwinklige Eckbereich zu dem dritten stumpfwinkligen Eckbereich, und der vierte stumpfwinklige Eckbereich zu dem fünften stumpfwinkligen Eckbereich, einen ersten Winkelabstand auf, und weist der zweite stumpfwinklige Eckbereich zu dem fünften stumpfwinkligen Eckbereich, und der dritte stumpfwinklige Eckbereich zu dem vierten stumpfwinkligen Eckbereich, einen zweiten Winkelabstand auf, wobei der erste Winkelabstand vom zweiten Winkelabstand verschieden ist.

Ein Winkelabstand entspricht dem Winkel der von zwei stumpfwinkligen Eckbereichen und der Werkzeugdrehachse eingeschlossen wird. Der Winkel liegt in einer Ebene zu der die Werkzeugdrehachse senkrecht steht.

Gemäss einer Ausführungsform der Erfindung ist der erste Winkelabstand kleiner als der zweite Winkelabstand.

Gemäss einer Ausführungsform der Erfindung entspricht der erste Winkelabstand dem 2/3-fachen des zweiten Winkelabstands.

Gemäss einer Ausführungsform der Erfindung beträgt der erste Winkelabstand 60° und der zweite Winkelabstand 90°.

Dadurch wird eine Anschlusseinrichtung bereitgestellt, die optimal in eine oben beschriebene Antriebseinrichtung mit drehmomentübertragenden eckförmigen Eingriffsbereichen, die einen Winkel von um die 120° einschliessen, eingreifen. Gemäss einer Ausführungsform der Erfindung ist die konische Seitenwandung um einen Winkel von 10°, 15°, 16°, 17°, 18°, 19° oder 20° zur Werkzeugdrehachse hin geneigt.

Dieser Winkel wird von der konischen Seitenwandung und einer Ebene die senkrecht zum Flansch steht eingeschlossen. Der Winkel ist so gewählt, dass die stumpfwinkligen Eckbereiche von den drehmomentübertragenden eckförmigen Eingriffsbereichen, beim Verbinden der Anschlusseinrichtung mit der Antriebseinrichtung, gegen eine elastische Federkraft der konischen Seitenwandung zur Werkzeugdrehachse hin gedrückt werden. Dadurch ist die Anschlusseinrichtung mittels einer Anpresskraft, die in Richtung der Werkzeugdrehachse auf den Boden wirkt, gegen die Antriebseinrichtung verspannbar.

Dadurch ist die Anschlusseinrichtung fest und insbesondere spielfrei mit der Antriebseinrichtung verbindbar.

Gemäss einer Ausführungsform der Erfindung liegen der zweite, dritte, vierte und fünfte stumpfwinklige Eckbereich zwischen dem ersten stumpfwinkligen Eckbereich und dem Arbeitselement.

Gemäss einer Ausführungsform der Erfindung weist der Boden schlitzförmige Ausnehmungen auf, die jeweils so ausgebildet sind, dass sie von jeweiligen Mitnehmerelementen um die Werkzeugdrehachse antreibbar sind.

Die schlitzförmigen Ausnehmungen können beispielsweise Ausstanzungen aus dem Boden sein und vor oder nach dem Tiefziehen im Boden ausgebildet werden. Die schlitzförmigen Ausnehmungen bilden ein zu den stumpfwinkligen Eckbereichen zusätzliches oder alternatives Mittel um das Werkzeug anzutreiben.

Dadurch ist das Werkzeug mit unterschiedlichen Antriebseinrichtung verbindbar, bzw. kompatibel.

Durch eine Kombination der stumpfwinkligen Eckbereiche mit den schlitzförmigen Ausnehmungen können verschiedene Antriebseinrichtungen Drehmomente auf das Werkzeug übertragen.

Gemäss einer Ausführungsform der Erfindung sind die schlitzförmigen Ausnehmungen von der Werkzeugdrehachse ausgehend radial strahlenförmig angeordnet.

Gemäss einer Ausführungsform der Erfindung verläuft die konische Seitenwandung zwischen den fünf stumpfwinkligen Eckbereichen eben oder verläuft zwischen zwei der fünf stumpfwinkligen Eckbereiche in eine Richtung gekrümmt.

Beispielsweise kann die konische Seitenwandung zwischen zwei stumpfwinkligen Eckbereichen gekrümmt, insbesondere ausgehend von der Werkzeugdrehachse konvex gekrümmt verlaufen.

Dadurch wird, wenn das Werkzeug mit der Antriebseinrichtung verbunden ist, ein Raum zur effizienten Luftkühlung bereitgestellt.

Gemäss einer Ausführungsform der Erfindung ist das Blech ein rostfreies Stahlblech, insbesondere ein Chromstahlblech.

Dadurch wird die mechanische und chemische Beständigkeit des Werkzeugs erhöht und der Herstellungsprozess vereinfacht, da keine Verfahrensschritte zur Oberflächenhärtung bzw. Passivierung des Werkzeugs nötig sind.

Gemäss einer Ausführungsform der Erfindung, weist die konische Seitenwandung genau fünf stumpfwinklige Eckbereiche auf.

Dabei ist genau im Sinne von ausschliesslich bzw. nur zu verstehen. Dadurch wird eine Anschlusseinrichtung bereitgestellt, die aufgrund der Anzahl eingreifender stumpfwinkliger Eckbereiche eine gute Verbindbarkeit mit einer Antriebseinrichtung eines Oszillierers ermöglicht und gleichzeitig einen optimalen Raum bereitstellt für eine Luftkühlung des Werkzeugs.

Gemäss einer Ausführungsform der Erfindung weist das Werkzeug ein Sägeblatt als Arbeitselement auf.

Das erfindungsgemässe Werkzeug ist im Folgenden rein beispielhaft anhand konkreter in den Figuren dargestellter Ausführungsformen näher beschrieben. Es zeigen:
- Figur 1: eine perspektivische Ansicht eines Werkzeugs mit angedeutetem Arbeitselement gemäss einer Ausführungsform der Erfindung;
- Figur 2: eine Aufsicht der in Figur 1 gezeigten Anschlusseinrichtung;
- Figur 3: eine Seitenansicht der in Figur 1 gezeigten Anschlusseinrichtung;
- Figur 4: eine Aufsicht auf die Umrisslinien der Anschlusseinrichtung der Figur 1 und einer Antriebseinrichtung, die in einer Schnittebene rechtwinklig zur Werkzeugdrehachse bzw. Antriebsdrehachse liegen, in einem Zustand in dem die Anschlusseinrichtung gegen die Antriebseinrichtung verspannt ist;
- Figur 5: die Figur 4 ohne Bezugszeichen, Winkelkennzeichen und Winkelhalbierende;
- Figur 6: eine perspektivische Ansicht einer Anschlusseinrichtung gemäss einer weiteren Ausführungsform der Erfindung; und
- Figur 7: eine Aufsicht der in Figur 6 gezeigten Anschlusseinrichtung.

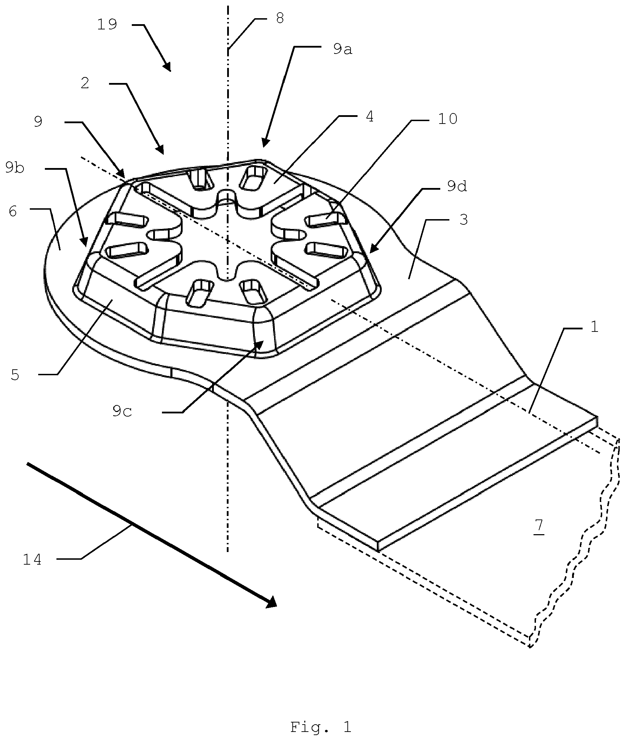

Figur 1 zeigt ein Werkzeug 19 gemäss einer Ausführungsform der Erfindung. Das Werkzeug 19 erstreckt sich in Längsrichtung entlang einer Mittelachse 1 und ist für eine Verwendung mit einem handgeführten Oszillierer ausgelegt. Die Mittelachse 1 ist eine Symmetrieachse und eine Mittelachse der Anschlusseinrichtung 2 und auch des Werkzeugs 19.

Der handgeführte Oszillierer weist eine drehoszillierende Antriebseinrichtung 16 mit zwölf in gleichen Abständen von einem Zentrum 17 angeordneten drehmomentübertragenden eckförmigen Eingriffsbereichen 15 auf. Die Antriebseinrichtung ist um eine Antriebsdrehachse 18 oszillierbar. Dieser Oszillierer kann zusätzlich oder alternativ Mitnehmerelemente aufweisen. Der Oszillierer ist in Figur 1 nicht gezeigt.

Das Werkzeug hat eine Anschlusseinrichtung 2, die aus einem Blech 3 tiefgezogen ist und einen Boden 4, eine konische Seitenwandung 5 und einen Flansch 6 aufweist. Die Anschlusseinrichtung 2 ist in einem Endbereich des Werkzeugs 19 ausgebildet.

Das Werkzeug 19 hat ein, in der Figur 1 angedeutetes, Arbeitselement 7, das in einem, entlang der Mittelachse 1, der Anschlusseinrichtung 2 gegenüberliegenden Endbereich des Werkzeugs 19 angeordnet ist. Das Arbeitselement 7 ist nur angedeutet und kann beispielsweise Sägezähne oder eine Schleiffläche oder eine Kante zum Schaben aufweisen. In der Figur 1 ist die Richtung 14 in der das Arbeitselement 7 gegen ein zu bearbeitendes Werkstück gedrückt wird gezeigt.

Das Werkzeug hat eine Werkzeugdrehachse 8, die mittig durch die Anschlusseinrichtung 2 und rechtwinklig zum Boden 4 der Anschlusseinrichtung 2 verläuft.

Das Werkzeug hat eine Symmetrieebene in der die Mittelachse 1 und die Werkzeugdrehachse 8 liegen.

Die konische Seitenwandung 5 weist fünf stumpfwinklige Eckbereiche 9, 9a, 9b, 9c, 9d auf.

Die fünf stumpfwinkligen Eckbereiche 9, 9a, 9b, 9c, 9d sind in einem gleichen Abstand zur Werkzeugdrehachse 8 so ausgebildet, dass sie jeweils an den jeweiligen drehmomentübertragenden eckförmigen Eingriffsbereichen 15 eingreifen und von diesen um die Werkzeugdrehachse 8 antreibbar sind.

Von den fünf stumpfwinkligen Eckbereichen 9, 9a, 9b, 9c, 9d liegt der erste stumpfwinklige Eckbereich 9 in der Symmetrieebene und der zweite 9a, dritte 9b, vierte 9c und fünfte 9d stumpfwinklige Eckbereich liegen seitlich der Symmetrieebene.

Die konische Seitenwandung 5 weist zusätzlich zu den fünf stumpfwinkligen Eckbereichen 9, 9a, 9b, 9c, 9d zwei stumpfwinklige Stützbereiche 23 auf. Diese zwei stumpfwinkligen Stützbereiche sind so ausgebildet, dass sie nicht in eckförmige Eingriffsbereiche 15 der Antriebseinrichtung 16, die zwölf in gleichen Abständen von einem Zentrum 17 angeordnete drehmomentübertragende eckförmige Eingriffsbereiche 15 aufweist, eingreifen. Mit anderen Worten ausgedrückt sind diese zwei stumpfwinkligen Stützbereiche 23 radial zur Werkzeugdrehachse 8 hin zurückversetzt und so ausgebildet, dass sie sich radial nicht in eckförmige Eingriffsbereiche 15 erstrecken. Diese stumpfwinkligen Stützbereiche 23 sind näher bei der Werkzeugdrehachse 8 ausgebildet als die fünf stumpfwinkligen Eckbereiche 9, 9a, 9b, 9c, 9d. Diese stumpfwinkligen Stützbereiche 23 sind so ausgebildet, dass sie jeweils mit der Antriebseinrichtung 2 in Kontakt bringbar sind und zwar in einem eckförmigen Stützbereich der Antriebseinrichtung 2, der mittig zwischen zwei eckförmigen Eingriffsbereichen 15 ausgebildet ist. Diese stumpfwinkligen Stützbereiche 23 können einer Verkippung der Anschlusseinrichtung im Betrieb zusätzlich entgegenwirken.

Die konische Seitenwandung 5 weist zwischen den fünf stumpfwinkligen Eckbereichen 9, 9a, 9b, 9c, 9d einen geringeren Abstand zur Werkzeugdrehachse 8 auf als bei den fünf stumpfwinkligen Eckbereichen 9, 9a, 9b, 9c, 9d. Auch die zwei weiteren in Figur 1 gezeigten stumpfwinkligen Eckbereiche weisen einen geringeren Abstand zur Werkzeugdrehachse 8 auf als die fünf stumpfwinkligen Eckbereiche 9, 9a, 9b, 9c, 9d.

Weil die Anschlusseinrichtung 2 aus einem Blech 3 tiefgezogen ist, weisen die Kanten der Anschlusseinrichtung 2 fürs Tiefziehen zwangsläufig typische Biegeradien auf. Dies trifft beispielsweise für die Kante zu die zwischen der konischen Seitenwandung 5 und dem Blech 3 gebildet wird und auch für diejenige die zwischen der konischen Seitenwandung 5 und dem Boden 4 gebildet wird.

Das in Figur 1 gezeigte Werkzeug 19 kann beispielsweise mittels einer Befestigungsschraube oder Befestigungsmutter oder einem federgespannten Zuganker, der auf einen mittigen Bereich des Bodens 4 der Anschlusseinrichtung 2 drückt, gegen die Antriebseinrichtung 16 verspannt werden.

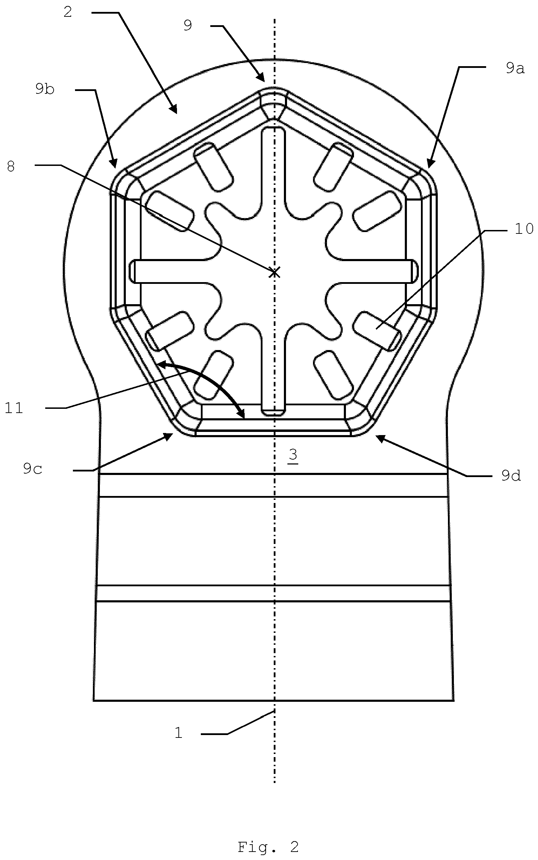

Figur 2 zeigt eine Aufsicht des in Figur 1 gezeigten Werkzeugs. Die Mittelachse 1 ist als Kreuz dargestellt, da sie senkrecht zur Papierebene steht. Figur 2 zeigt den Winkel 11, der von dem stumpfwinkligen Eckbereich 9c und jeweils auch von den anderen stumpfwinkligen Eckbereichen eingeschlossen wird.

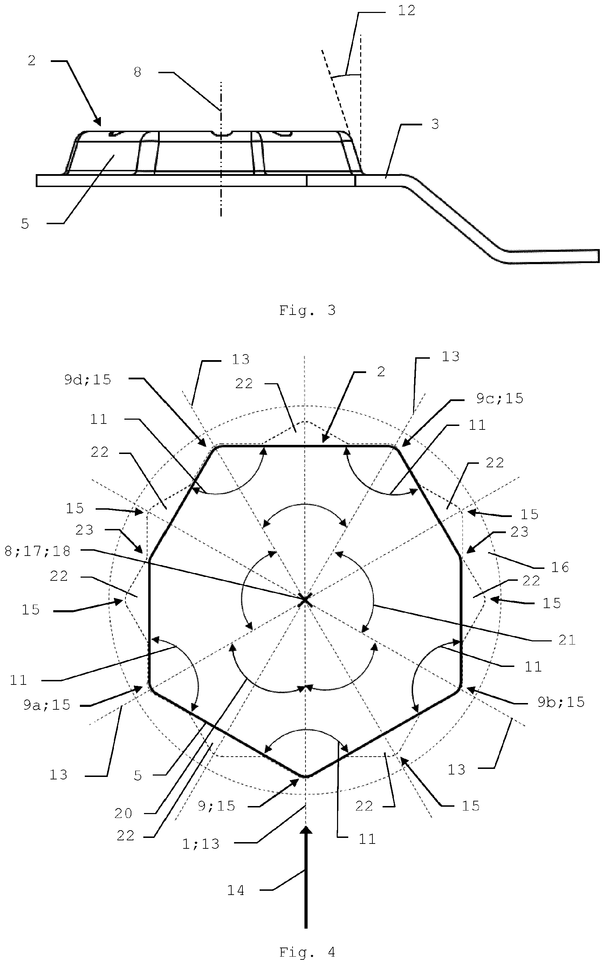

Figur 3 zeigt eine Seitenansicht der in der Figur 1 gezeigten Anschlusseinrichtung 2. Figur 3 zeigt den Winkel 12, um den die konische Seitenwandung 5 zur Werkzeugdrehachse 2 hin geneigt ist.
Figur 4 zeigt eine Aufsicht auf die Umrisslinien der Anschlusseinrichtung 2 der Figur 1 und einer Antriebseinrichtung 16, die in einer Schnittebene rechtwinklig zur Werkzeugdrehachse 8 bzw. Antriebsdrehachse 18 liegen, in einem Zustand in dem die Anschlusseinrichtung 2 gegen die Antriebseinrichtung 16 verspannt ist. Die Antriebseinrichtung 16 weist zwölf eckförmige Eingriffsbereiche 15 auf. Davon übertragen nur fünf ein Drehmoment auf die Anschlusseinrichtung 2, weil nur fünf stumpfwinklige Eckbereiche 9, 9a, 9b, 9c, 9d der Anschlusseinrichtung 2 in eckförmige Eingriffsbereiche 15 eingreifen. Figur 4 zeigt die Winkelhalbierenden 13 zu den stumpfen Winkeln 11 der stumpfwinkligen Eckbereiche 9, 9a, 9b, 9c, 9d. Die stumpfwinkligen Eckbereiche 9, 9a, 9b, 9c, 9d weisen, in Bezug auf die Werkzeugdrehachse 8 und entlang der Winkelhalbierenden 13, keinen gegenüberliegenden stumpfwinkligen Eckbereich auf. Figur 4 zeigt den zweiten Winkelabstand 21 zwischen dem zweiten stumpfwinkligen Eckbereich 9a und dem fünften stumpfwinkligen Eckbereich 9d. Figur 4 zeigt ebenfalls den ersten Winkelabstand 20 zwischen dem ersten stumpfwinkligen Eckbereich 9 und dem zweiten stumpfwinkligen Eckbereich 9a, zwischen dem ersten stumpfwinkligen Eckbereich 9 und dem dritten stumpfwinkligen Eckbereich 9b, und zwischen dem vierten stumpfwinkligen Eckbereich 9c und dem fünften stumpfwinkligen Eckbereich 9d. Der erste Winkelabstand 20 beträgt 60° und der zweite Winkelabstand 21 beträgt 90°. Der stumpfe Winkel 11 beträgt 120°. In Figur 4 ist auch der Raum 22, der eine effiziente Kühlung der Anschlusseinrichtung ermöglicht gezeigt.

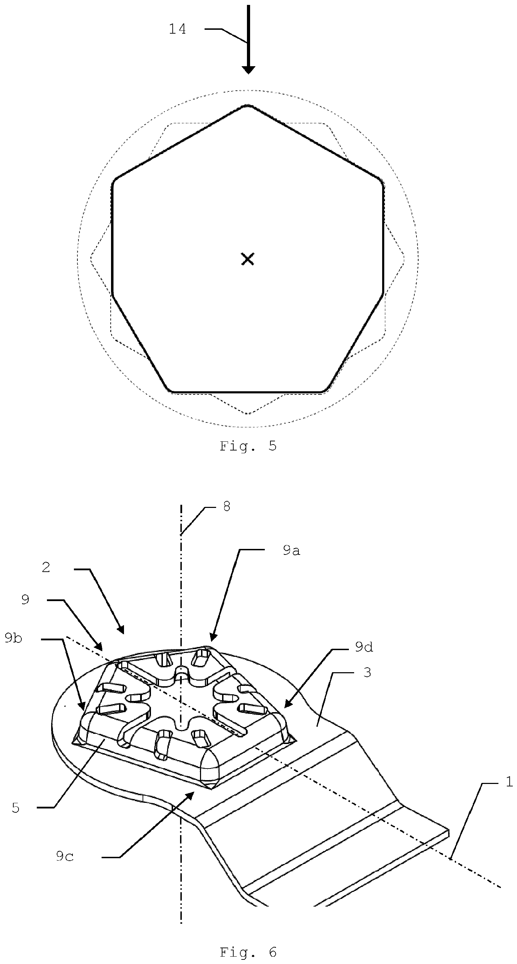

Figur 5 zeigt, zur besseren Übersicht, die Figur 4 ohne Bezugszeichen, Winkelkennzeichen und Winkelhalbierende.
Figur 6 zeigt eine Anschlusseinrichtung 2 gemäss einer Ausführungsform der Erfindung. Gemäss dieser Ausführungsform weist die konische Seitenwandung 5 genau fünf stumpfwinklige Eckbereiche 9, 9a, 9b, 9c, 9d auf.

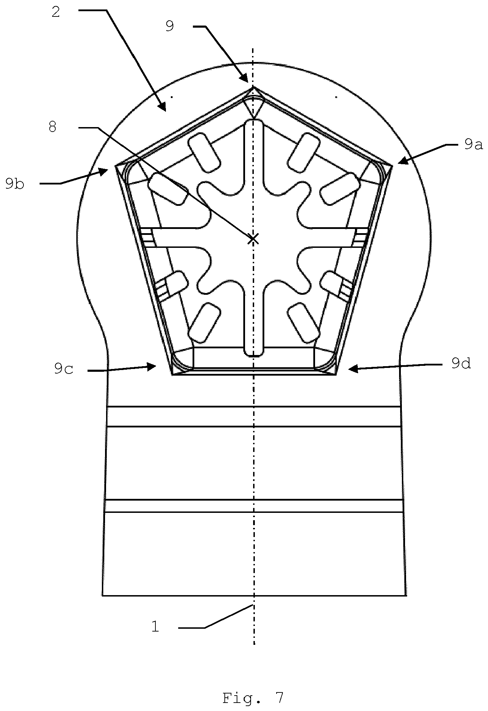

Figur 7 zeigt eine Aufsicht der in Figur 6 gezeigten Anschlusseinrichtung 2. Die Mittelachse 1 ist als Kreuz dargestellt, da sie senkrecht zur Papierebene steht.

## Patentansprüche

1. Werkzeug (19), das sich in Längsrichtung entlang einer Mittelachse (1) erstreckt und für eine Verwendung mit einem handgeführten Oszillierer ausgelegt ist, wobei der handgeführte Oszillierer eine drehoszillierende Antriebseinrichtung (16) mit zwölf in gleichen Abständen von einem Zentrum (17) angeordneten drehmomentübertragenden eckförmigen Eingriffsbereichen (15) und/oder mit Mitnehmerelementen aufweist, mit
einer Anschlusseinrichtung (2), die aus einem Blech (3) tiefgezogen ist, einen Boden (4), eine konische Seitenwandung (5) und einen Flansch (6) aufweist und in einem Endbereich des Werkzeugs (19) ausgebildet ist,
einem Arbeitselement (7), das in einem, entlang der Mittelachse (1), der Anschlusseinrichtung (2) gegenüberliegenden Endbereich des Werkzeugs (19) angeordnet ist,
einer Werkzeugdrehachse (8), die mittig durch die Anschlusseinrichtung (2) und rechtwinklig zum Boden (4) verläuft, und
einer Symmetrieebene in der die Mittelachse (1) und die Werkzeugdrehachse (8) liegen,
**dadurch gekennzeichnet, dass**
die konische Seitenwandung (5) fünf stumpfwinklige Eckbereiche (9, 9a, 9b, 9c, 9d) aufweist,
die in einem gleichen Abstand zur Werkzeugdrehachse (8) so ausgebildet sind, dass sie jeweils an den jeweiligen drehmomentübertragenden eckförmigen Eingriffsbereichen (15) eingreifen und von diesen um die Werkzeugdrehachse (8) antreibbar sind, und von denen der erste stumpfwinklige Eckbereich (9) in der Symmetrieebene liegt und der zweite (9a), dritte (9b), vierte (9c) und fünfte (9d) stumpfwinklige Eckbereich seitlich der Symmetrieebene liegen,
wobei die konische Seitenwandung (5) zwischen den fünf stumpfwinkligen Eckbereichen (9, 9a, 9b, 9c, 9d) einen geringeren Abstand zur Werkzeugdrehachse (8) aufweist als bei den fünf stumpfwinkligen Eckbereichen (9, 9a, 9b, 9c, 9d) .

2. Werkzeug (19) nach Anspruch 1, **dadurch gekennzeichnet, dass** die fünf stumpfwinkligen Eckbereiche (9, 9a, 9b, 9c, 9d) jeweils, zur Werkzeugdrehachse (8) hin, einen gleichen Winkel (11) einschliessen, vorzugsweise von zwischen 110° und 130°, besonders bevorzugt von 120°.

3. Werkzeug (19) nach einem der Ansprüche 1 bis 2, **dadurch gekennzeichnet, dass** jeder der fünf stumpfwinkligen Eckbereiche (9, 9a, 9b, 9c, 9d) eine Winkelhalbierende (13) zum eingeschlossenen Winkel (11) aufweist, wobei diese Winkelhalbierende (13) rechtwinklig zur Werkzeugdrehachse (8) verläuft und diese schneidet, und auf jeder Winkelhalbierenden (13) genau ein stumpfwinkliger Eckbereich (9, 9a, 9b, 9c, 9d) liegt.

4. Werkzeug (19) nach einem der Ansprüche 1 bis 3, **dadurch gekennzeichnet, dass** in Bezug auf die Werkzeugdrehachse (8)
der erste stumpfwinklige Eckbereich (9) zu dem zweiten stumpfwinkligen Eckbereich (9a),
der erste stumpfwinklige Eckbereich (9) zu dem dritten stumpfwinkligen Eckbereich (9b), und
der vierte stumpfwinklige Eckbereich (9c) zu dem fünften stumpfwinkligen Eckbereich (9d),
einen ersten Winkelabstand (20) aufweist, und
der zweite stumpfwinklige Eckbereich (9a) zu dem fünften stumpfwinkligen Eckbereich (9d), und
der dritte stumpfwinklige Eckbereich (9b) zu dem vierten stumpfwinkligen Eckbereich (9c),
einen zweiten Winkelabstand (21) aufweist, wobei der erste Winkelabstand (20) vom zweiten Winkelabstand (21) verschieden ist.

5. Werkzeug (19) nach Anspruch 4, **dadurch gekennzeichnet, dass** der erste Winkelabstand (20) kleiner ist als der zweite Winkelabstand (21).

6. Werkzeug (19) nach Anspruch 4 oder 5, **dadurch gekennzeichnet, dass** der erste Winkelabstand (20) dem 2/3-fachen des zweiten Winkelabstands (21) entspricht.

7. Werkzeug (19) nach einem der Ansprüche 4 bis 6, **dadurch gekennzeichnet, dass** der erste Winkelabstand (20) 60° beträgt und der zweite Winkelabstand (21) 90° beträgt.

8. Werkzeug (19) nach einem der Ansprüche 1 bis 7, **dadurch gekennzeichnet, dass** die konische Seitenwandung (5) um einen Winkel (12) von 10°, 15°, 16°, 17°, 18°, 19° oder 20° zur Werkzeugdrehachse (8) hin geneigt ist.

9. Werkzeug (19) nach einem der Ansprüche 1 bis 8, **dadurch gekennzeichnet, dass** der zweite (9a), dritte (9b), vierte (9c) und fünfte (9d) stumpfwinklige Eckbereich zwischen dem ersten stumpfwinkligen Eckbereich (9) und dem Arbeitselement (7) liegen.

10. Werkzeug (19) nach einem der Ansprüche 1 bis 9, **dadurch gekennzeichnet, dass** der Boden (4) schlitzförmige Ausnehmungen (10) aufweist, die jeweils so ausgebildet sind, dass sie von jeweiligen Mitnehmerelementen um die Werkzeugdrehachse (8) antreibbar sind.

11. Werkzeug (19) nach Anspruch 10, **dadurch gekennzeichnet, dass** die schlitzförmigen Ausnehmungen (10) von der Werkzeugdrehachse (8) ausgehend radial strahlenförmig angeordnet sind.

12. Werkzeug (19) nach einem der Ansprüche 1 bis 11, **dadurch gekennzeichnet, dass** die konische Seitenwandung (5) zwischen den fünf stumpfwinkligen Eckbereichen (9, 9a, 9b, 9c, 9d) eben verläuft oder zwischen zwei der fünf stumpfwinkligen Eckbereiche (9, 9a, 9b, 9c, 9d) in eine Richtung gekrümmt verläuft.

13. Werkzeug (19) nach einem der Ansprüche 1 bis 12, **dadurch gekennzeichnet, dass** das Blech (3) ein rostfreies Stahlblech, insbesondere ein Chromstahlblech, ist.

14. Werkzeug (19) nach einem der Ansprüche 1 bis 13, **dadurch gekennzeichnet, dass** die konische Seitenwandung (5) genau fünf stumpfwinklige Eckbereiche (9, 9a, 9b, 9c, 9d) aufweist.

15. Werkzeug (19) nach einem der Ansprüche 1 bis 14, **dadurch gekennzeichnet, dass** das Werkzeug (19) ein Sägeblatt als Arbeitselement (7) aufweist.
